(19) Europäisches Patentamt
European Patent Office
Office européen des brevets

(11) **EP 2 837 983 A1**

(12) **EUROPEAN PATENT APPLICATION**

(43) Date of publication:
**18.02.2015 Bulletin 2015/08**

(51) Int Cl.:
***G05B 23/02*** *(2006.01)*

(21) Application number: **13275185.0**

(22) Date of filing: **14.08.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **BAE Systems PLC
London SW1Y 5AD (GB)**

(72) Inventor: **The designation of the inventor has not
yet been filed**

(74) Representative: **BAE SYSTEMS plc
Group IP Department
Farnborough Aerospace Centre
Farnborough
Hampshire GU14 6YU (GB)**

(54) **Assessment of structural health of aircraft**

(57)    Disclosed are a method and apparatus for determining an assessment of the structural health of a system under test (2). The method comprises: providing, in a database (16), a plurality of different functions (30), the database (16) being configured to permit the addition to the database (16) of further functions (30) and the deletion or modification of a stored function (30); acquiring, by one or more processors, one or more signals, each signal being a measurement over time of a respective parameter of the system under test (2); acquiring, by the one or more processors, from the database (16), one or more of the functions (30) currently stored by the database (16); and calculating, by the one or more processors, using the one or more signals, values for the one or more acquired functions (30), thereby providing an assessment of the structural health of the system (2).

To 6

14

To 16

To 2

24

28

26

20

22

FIG. 3

EP 2 837 983 A1

**Description**

FIELD OF THE INVENTION

The present invention relates to the assessment of the structural health of systems.

BACKGROUND

Structural Health Management (SHM) systems are used to assess the structural health of aircraft throughout the lifetimes of those aircraft.

Typically, SHM systems for aircraft are complex suites of hardware and software that are initially defined during an aircraft development phase. When an aircraft is in service, in order to ensure accuracy of the SHM system, it tends to be desirable to update an SHM system for that aircraft to account for unforeseen or alternative ways of operating the aircraft, changes to the configuration of the aircraft, in service issues with the aircraft and the like.

However, in conventional SHM systems, the SHM processes tend to be hard-coded software (e.g. written in Java, C++, or ADA). Thus, changing an SHM algorithm would tend to require re-coding that algorithm, re-compiling the software to provide update software, and then re-qualifying the updated software. This tends to be a difficult, lengthy and/or costly process. For example, a high cost of maintaining a standing team to carry out software updates and testing, a high cost of implementing and maintaining test rigs, and the length of time required to run a full qualification of an updated SHM system tend to prevent or oppose the rapid updating of an SHM system.

SUMMARY OF THE INVENTION

In a first aspect, the present invention provides a method for determining an assessment of the structural health of the system under test. The method comprises: providing, in a database, a plurality of different functions, the database being configured to permit the addition to the database of one or more further functions and the deletion or modification of a stored function; acquiring, by one or more processors operatively coupled to the database, one or more signals, each signal being a measurement, over time, of a respective parameter of the system under test; acquiring, by the one or more processors, from the database, one or more of the functions currently stored by the database; and calculating, by the one or more processors, using the one or more signals, values for the one or more acquired functions, thereby providing an assessment of the structural health of the system.

The method may further comprise adding, to the database, one or more further functions.

The method may further comprise deleting a function from the database.

The method may further comprise modifying a function stored by the database.

Each function may have one or more arguments. For each function, an argument of that function may be either a different function or a parameter of the system.

Each function may be a logical statement specified using one or more pre-defined logical or arithmetic operations. The one or more processors may include one or more arithmetic and logic processors.

The method may further comprise, using the calculated values for the one or more acquired functions, performing, by the one or more processors, one or more data analysis processes to provide an assessment of the structural health of the system.

The step of acquiring signals may comprise acquiring multiple different signals. The method may further comprise performing, by a time alignment module operative coupled to the one or more processors, a time alignment process so as to time-align the multiple different signals and produce a set of time-aligned signals. The step of calculating values for the one or more acquired functions may be performed using the time-aligned signals.

The method may further comprise providing, in the database, a plurality of Control Point specifications, each Control Point specifications specifying a function. The method may further comprise acquiring, by the one or more processors, from the database, one or more of the Control Point specifications currently stored by the database. The steps of acquiring one or more of the functions and calculating values for those acquired functions may comprise acquiring those functions specified by the acquired Control Point specifications and calculating values for those acquired functions. The database may be configured to permit the addition to the database of one or more further Control Point specifications and the deletion or modification of a stored Control Point specification.

Each Control Point specification may further specify a data analysis process. The method may further comprise, for each acquired Control Point specification, performing, by the one or more processors, using the calculated values for the function specified by that Control Point specification, the data analysis process specified by that Control Point specification.

The method may further comprise storing, in the database, the calculated values for the one or more acquired functions.

The method may further comprise storing, in the database, metadata associated with the calculated values for the one or more acquired functions.

The system under test may be a vehicle.

The vehicle may be an aircraft.

Each signal may be a measurement, over time, of parameter of an aircraft subsystem selected from the group of aircraft subsystems consisting of a propulsion system, mechanical systems, a power system, a fuel system, a flight management system, an environmental control system, a hydraulics system, and a radar system.

In a further aspect, the present invention provides apparatus for determining an assessment of the structural health of the system under test. The apparatus comprises a database and one or more processor operatively coupled to the database. The database is configured to store a plurality of different functions and permit the addition to the database of one or more further functions and/or the deletion or modification of a stored function. The one or more processors are configured to acquire, from the database, one or more functions and calculate, using one or more signals, values for the one or more acquired functions, thereby providing an assessment of the structural health of the system. Each signal is a measurement, over time, of a respective parameter of the system under test.

In a further aspect, the present invention provides a program or plurality of programs arranged such that when executed by a computer system or one or more processors it/they cause the computer system or the one or more processors to operate in accordance with any of the above aspects.

In a further aspect, the present invention provides a machine readable storage medium storing a program or at least one of the plurality of programs according to the preceding aspect.

BRIEF DESCRIPTION OF THE DRAWINGS

Figure 1 is a schematic illustration (not to scale) of an example scenario;

Figure 2 is a schematic illustration (not to scale) of a ground station;

Figure 3 is a schematic illustration (not to scale) showing a Structural Health Monitoring (SHM) module;

Figure 4 is a schematic illustration (not to scale) showing an SHM database; and

Figure 5 is a process flow chart showing certain steps of an embodiment of an SHM process.

DETAILED DESCRIPTION

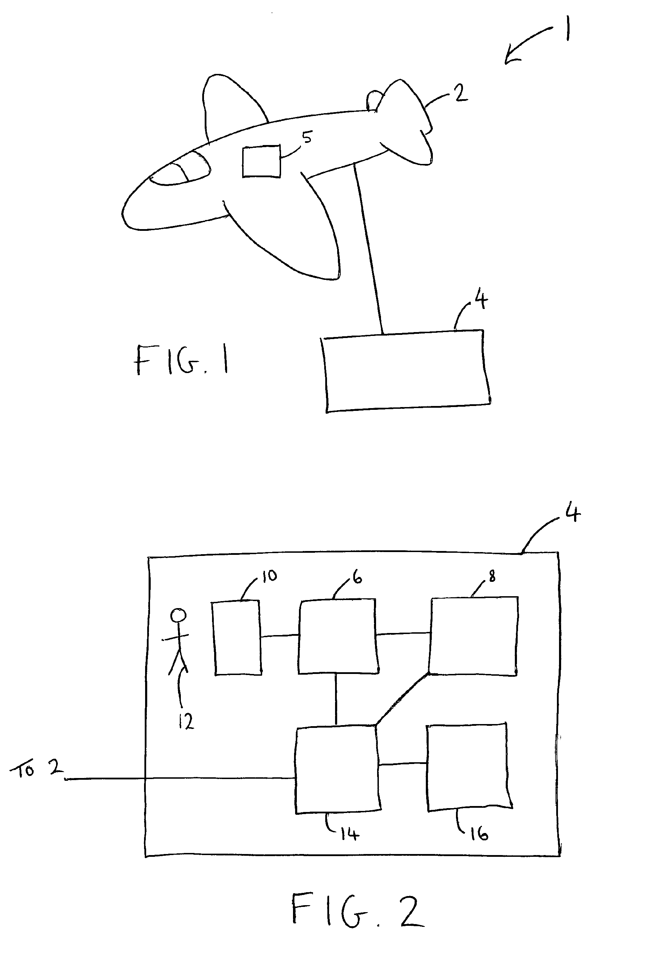

Figure 1 is a schematic illustration (not to scale) of an example scenario 1 in which an embodiment of a method of performing a Structural Health Monitoring (SHM) process is to be implemented.

In the scenario 1 an aircraft 2 is coupled to a ground station 4 such that data may be downloaded from the aircraft 2 to the ground station 4.

The aircraft 2 may be a manned or an unmanned aircraft. The aircraft 2 is part of a fleet of aircraft. The fleet of aircraft may comprise multiple aircraft. The fleet of aircraft may comprise multiple different types of aircraft.

The aircraft comprises a plurality of aircraft subsystems 5. Examples of such aircraft subsystems include, but are not limited to, a propulsion system, mechanical systems, a power system, a fuel system, a flight management system, an environmental control system, a hydraulics system, and a radar system.

The ground station 4 is described in more detail later below with reference to Figure 2.

In the scenario 1, data is downloaded from the aircraft 2 to the ground station 4. This data may include data generated by one or more of the aircraft subsystems 5. Also, the data may include data relating to a state or operations of one or more of the aircraft subsystems 5.

The data that is downloaded from the aircraft 2 to the ground station 4 may include measurements taken by one or more measurement apparatus (e.g. sensors or transducers) onboard the aircraft 2. Appropriate types of measurement apparatus that may generate measurement data include, but are not limited to, accelerometers, temperature sensors, pressure sensors, strain gauges, acoustic sensors, fluid level sensors, fluid flow sensors, altimeters, compasses, timers, and clocks.

Figure 2 is a schematic illustration (not to scale) of the ground station 4 that is to implement an embodiment of the SHM process.

The ground station 4 comprises a Fleet Management Module 6, a Fleet Management database 8, an operator interface 10, a human operator 12, a System Health Monitoring (SHM) module 14, and an SHM database 16.

In this embodiment, the Fleet Management Module 6 is configured to implement one or more fleet management processes, using information stored in the Fleet Management database 8 and/or received from the SHM module 14 or operator 12. Fleet management processes can include, but are not limited to, processes for managing the maintenance of aircraft within the fleet, tracking aircraft and aircraft components within the fleet, performing diagnostic/prognostic processes for aircraft within the fleet, pilot management, fuel management, and health and safety management. Fleet management processes may, for example, be performed to maximise aircraft availability, efficiency, and operational readiness whilst maintaining aircraft flight safety. In this embodiment, the Fleet Management Module 6 provides information (e.g. the results of the fleet management processes) to the operator 12 using the operator interface 10. The information provided to the operator is to aid, or guide, the operator 12 in maintenance planning for aircraft, compiling aircraft usage statistics, sortie management and planning etc.

The Fleet Management Module 6 is connected to the Fleet Management database 8, the operator interface 10, and the SHM module 14 such that information may be sent between the Fleet Management Module 6 and each of the Fleet Management database 8, the operator interface 10, and the SHM module 14.

In this embodiment, the Fleet Management database 8 is configured to store information relating to the aircraft 2 and the fleet of aircraft. For example, the Fleet Management database 8 may store, for each aircraft in the fleet, identification information, an aircraft type, service information (such as a service history), and operational information (such as 'g' spectrums, engine hours, fuel usage, etc.). Any appropriate information relating to the aircraft fleet or an individual aircraft within the fleet may be stored by the Fleet Management database 8.

The operator interface 10 is a device that may be used, by the operator 12, to input information to the Fleet Management Module 6. Also, in this embodiment the operator interface 10 comprises a display for displaying, to the operator 12, information sent from the Fleet Management Module 6 to the operator interface 10. The operator interface 10 may for example comprise a keyboard, a mouse, a touch screen display, or voice recognition device.

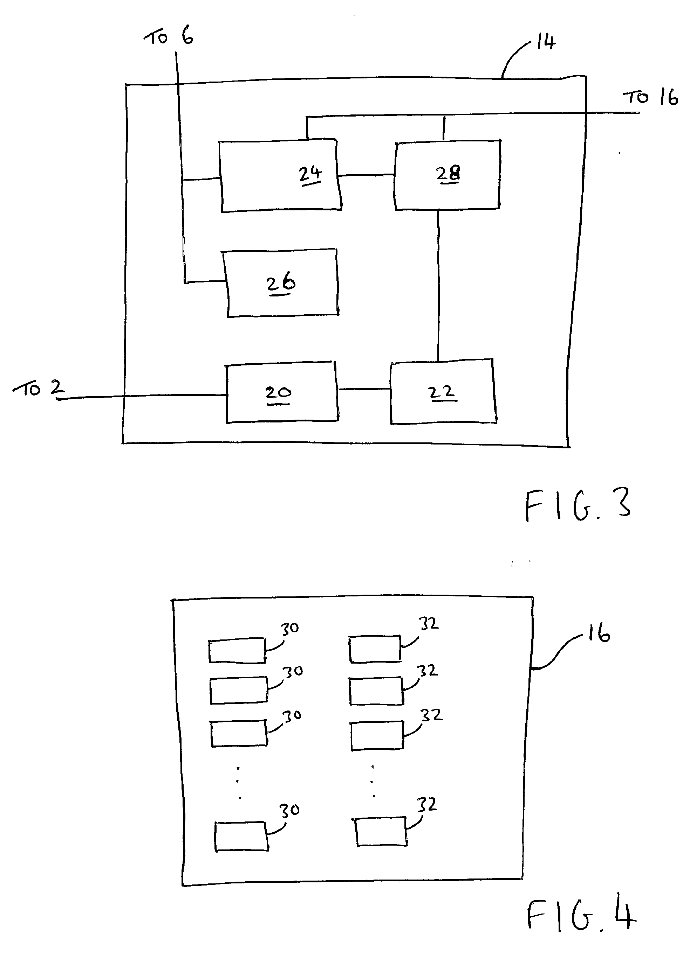

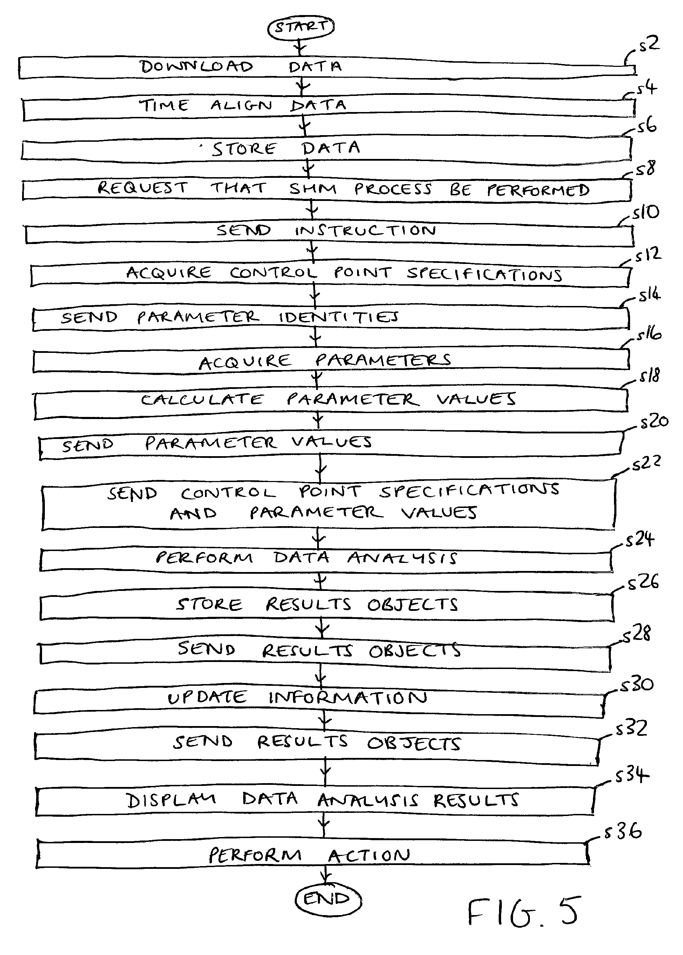

The SHM module 14 is described in more detail later below with reference to Figure 3. In this embodiment, the SHM module 14 is connected to the aircraft 2 such that data downloaded from the aircraft 2 is received by the SHM module 14. Also, in this embodiment, the SHM module 14 is connected to the Fleet Management Module 6, the Fleet Management database 8, and the SHM database 16 such that information may be sent between the SHM module 14 and each of the Fleet Management Module 6, the Fleet Management database 8, and the SHM database 16. In operation, the SHM module 14 processes data received from the aircraft 2 using information stored in the SHM database 16 and the Fleet Management database 8, as described in more detail later below with reference to Figure 5.

The SHM database 16 is described in more detail later below with reference to Figure 4. In this embodiment, the SHM database 16 is configured to store information used by the SHM module 14 in the processing of aircraft data.

Figure 3 is a schematic illustration (not to scale) showing the SHM module 14.

In this embodiment, the SHM module 14 comprises a time alignment module 20, a memory 22, a Control Point data module 24, a Control Point analysis module 26, and a logic processor 28.

In this embodiment, the time alignment module 20 is configured to transform different sets of data (for example, data from or relating to different aircraft subsystems 5) into a common coordinate system having a time coordinate. In other words, the time alignment module 20 is configured to "time align" the different sets of data downloaded from the aircraft. Thus, measurements taken by one aircraft subsystem 5 at a particular time are, in effect, associated with measurements taken by one or more different aircraft subsystems 5. The time alignment module 20 is connected to the memory 22 such that time-aligned data may be sent from the time alignment module 20 to the memory 22.

In this embodiment, the memory 22 is configured to store time-aligned data received from the time alignment module 20. In addition to being connected to the time alignment module 20, the memory 22 is also connected to the Control Point data module 24 and the logic processor 28 such that each of the Control Point data module 24 and the logic processor 28 may acquire data stored by the memory 22.

In this embodiment, the Control Point data module 24 is connected to the Fleet Management module 6 such that information may be sent between the Fleet management module 6 and the Control Point data module 24. Also, the Control Point data module 24 is connected to the SHM database 16 such that information stored in the SHM database 16 may be acquired by the Control Point data module 24. Also, the Control Point data module 24 is connected to the logic processor 28 such that information may be sent between the Control Point data module 24 and the logic processor 28. In some embodiments, the Control Point data module 24 is connected to the memory 22 such that information stored in the memory 22 may be acquired by the Control Point data module 24. In this embodiment, the Control Point data module 24 comprises one or more processors configured to process data received by the Control Point data module 24. The processing of data performed by the Control Point data module 24 is described in more detail later below with reference to Figure 5. The Control Point data module outputs "Control Point data" for analysis by the Control Point analysis module 26, as described in more detail later below with reference to Figure 5.

In this embodiment, the Control Point analysis module 26 is connected to the Control Point data module 24 such that Control Point data may be sent from the Control Point data module 24 to the Control Point analysis module 26. In this embodiment, the Control Point analysis module comprises one or more processors configured to analyse the Control Point data received by the Control Point analysis module 24. The analysis of the Control Point data by the Control Point analysis module 26 may comprise performing one or more SHM processes to, for example, detect damage with an aircraft subsystem 5, detect changes to materials of an aircraft subsystem 5, detect changes to connectivity between aircraft subsystems 5, and detect changes in performance of an aircraft subsystem. In this embodiment, the Control Point analysis module 26 analyses the Control Point data to determine a current state of the aircraft subsystems (i.e. an assessment of the structural health of the aircraft 2). In this embodiment, in addition to being connected to the Control Point data module 24, the Control Point analysis module 26 is connected to the Fleet Management module 6 such that the results of the data analysis performed by the Control Point analysis module 26 may be sent from the Control Point analysis module 26 to the Fleet Management module 6.

In this embodiment, the logic processor 28 is a processor or processors configured to process arithmetic and logical operations as described in more detail later below with reference to Figure 5. In other words, the logic processor 28 is a arithmetic and logic unit. In this embodiment, the logic processor 28 is connected to Control Point module 24 so that information may be sent between the Control Point module 24 and the logic processor 28 as described in more detail later below with reference to Figure 5. Also, the logic processor 28 is connected to the SHM database 16 and the memory 22 such that information may be acquired from each of the SHM database 16 and the memory 22 for processing by the logic processor 28.

Figure 4 is a schematic illustration (not to scale) showing the SHM database 16.

In this embodiment, the SHM database 16 contains a plurality of Parameters 30 and a plurality of Control Point specifications 32.

In this embodiment, each Parameter 30 is some function of one or more measurable factors (such as temperature and pressure) that define an aircraft system and specify that aircraft subsystem's behaviour.

In this embodiment, one or more of the Parameters 30 is equal to a measureable factor of an aircraft subsystem 5. An example of such a Parameter 30 is temperature values measured over a time period by a particular temperature sensor of an aircraft subsystem 5. Also, in this embodiment, one or more of the Parameters 30 is a function of one or more different Parameters 30 (which may also be functions of one or more different Parameters 30, and so on). A Parameter that is a function of one or more other Parameters is, in effect, a composition of functions which has an argument that is one or more measureable factors (of one or more aircraft subsystems 5).

In this embodiment, the Parameters 30 are specified in a language that is useable by the logic processor 28. The Parameters 30 are logical statements specified using pre-defined logical or arithmetic operations or functions.

Examples of appropriate logical operations that may be used to define the Parameters 30 include, but are not limited to, the following logical operations:

IN(a,b,c,d...) which returns a value TRUE (or 1) if a is equal to b or c or d etc. and a value FALSE (or 0) otherwise;

BETWEEN(a,b,c) or BWN(a,b,c) which returns a value TRUE (or 1) if a is greater than or equal to b AND a is less than or equal to c, and a value FALSE (or 0) otherwise;

EQ(a,b) which returns a value TRUE (or 1) if a is equal to b and a value FALSE (or 0) otherwise;

NE(a,b) which returns a value TRUE (or 1) if a is not equal to b and a value FALSE (or 0) otherwise;

LE(a,b) which returns a value TRUE (or 1) if a is less than or equal to b and a value FALSE (or 0) otherwise;

LT(a,b) which returns a value TRUE (or 1) if a is strictly less than b and a value FALSE (or 0) otherwise;

GE(a,b) which returns a value TRUE (or 1) if a is greater than or equal to b and a value FALSE (or 0) otherwise;

GT(a,b) which returns a value TRUE (or 1) if a is strictly greater than b and a value FALSE (or 0) otherwise;

AND(l,m,n,...) which returns a value TRUE (or 1) if all arguments are satisfied, and a value FALSE (or 0) otherwise;

OR(l,m,n,...) which returns a value TRUE (or 1) if one or more arguments are satisfied, and a value FALSE (or 0) otherwise;

NOT(l) which returns a value TRUE (or 1) if the argument (l) is not satisfied, and a value FALSE (or 0) otherwise;- True if !l

ISNAN(a) which returns a value TRUE (or 1) if a is not a number, and a value FALSE (or 0) otherwise;

FIRST() or FST() which returns a value TRUE (or 1) if the argument is at the start of data, and a value FALSE (or 0) otherwise;

LAST() or LST()-which returns a value TRUE (or 1) if the argument is at the end of data, and a value FALSE (or 0) otherwise;

TRUE(...) which returns TRUE (or 1); and

FALSE(...) which returns FALSE (or 0).

In some embodiments, one or more different logical operations are used to define one or more of the Parameters 30 instead of or in addition to one or more of the above listed logical operations.

Examples of appropriate arithmetic operations that may be used to define the Parameters 30 include, but are not limited to, the following arithmetic operations:

IF(c,a,b) which returns a if c returns TRUE, or b if c returns FALSE;

DO(a,b,c,...) which evaluate all given arguments (a, b, c, ...) and returns only the last argument;

ADD(a,b,c,...) which returns a + b + c + ...;

SUB(a,b,c,...) which returns a - b - c - ...;

MUL(a,b,c,...) which returns a * b * c *...;

DIV(a,b,c,...) which returns a / b / c / ...;

MOD(a,b) which returns a (mod b);

POW(a,b) which returns $a^b$;

SQRT(a) which returns the square root of a;

ABS(a) which returns the absolute value of a;

MAX(a,b,c,...) which returns the maximum of the arguments a, b, c, ...;

MIN(a,b,c,...) which returns the minimum of the arguments a, b, c, ...;

SIN(a) which returns sin(a);

COS(a) which returns cos(a);

TAN(a) which returns tan(a); and

CONCAT(s1,s2,s3,...) which returns a concatenation of strings s1 + s2 + s3 + ....

In some embodiments, one or more different arithmetic operations are used to define one or more of the Parameters 30 instead of or in addition to one or more of the above listed arithmetic operations.

By way of example, a first Parameter $P_1$ may be a measureable factor such as temperature measured over a time period by a particular temperature sensor of an aircraft subsystem 5.

Also by way of example, a second Parameter $P_2$ may be defined to be some function of a third Parameter $P_3$ and a fourth Parameter $P_4$, for example:

$$P_2 := SQRT(ADD(POW(P_3,2),POW(P_4, 2)).$$

Each of the third and fourth Parameters $P_3$ and $P_4$ may be measureable factors or functions of one or more further Parameters 30.

In this embodiment, each of the Parameters 30 included in the SHM database 16 is different to each of the other Parameters 30 in the SHM database 16.

Advantageously, the Parameters 30 are flexible. Parameters may be, for example, state decider parameters (that may, for example, indicate weight bands for the aircraft, an angle of attack for the aircraft, take off/landing state flags, or events such as over speeds, limit exceedance etc.), timer parameters (which may, for example, indicate a time that the aircraft 2 spent in a particular state), counter parameters (which may, for example, indicate a number of take-offs, landings, pressurisations etc. experienced by the aircraft 2). By way of example, a Parameter that indicates a Landing Gear Overspeed event may be defined to be:

$$\text{AND}(\text{OR}(\text{NE}(P_A,1),\text{NE}(P_B,1), \text{NE}(P_C,1)),\text{OR}(\text{GT}(P_D,0.65),\text{GT}(P_E,300)))=1 \ ; =0$$

Where:

$P_A$ is a Left Main Gear Position for the aircraft 2;

$P_B$ is a Nose leg Position for the aircraft 2;

$P_C$ is a Right Main Gear Position for the aircraft 2;

$P_D$ is a Mach experienced by the aircraft 2; and

$P_E$ is a Calibrated Airspeed experienced by the aircraft 2.

In this embodiment, the SHM process that is to be performed on the aircraft data at the ground station 4 is defined as a series of Control Points. In this embodiment, a Control Point is a data analysis process performed on a Parameter 30, the results of which are indicative of the structural health or an appropriate aircraft usage metric of the aircraft 2. Thus, based on the results of a Control Point, an action may be taken so as to prevent, eliminate, or reduce a risk factor (e.g. of structural failure) to an acceptable level. In this embodiment, the results of a Control Point, or Control Point status information, is returned to the Fleet Management Module 6 after each Control Point analysis has been preformed. Control Point status information may, for example, indicate whether or not a Parameter value has exceeded a predefined limit so that appropriate action can be taken e.g. by the operator 12.

In this embodiment, each Control Point specification 32 specifies a Parameter 30 and a data analysis process that is to be performed on that Parameter 30. Example data analysis processes that may be performed on a Parameter 30 include, but are not limited to: a crack growth analysis, a strain-life analysis, a determination of whether or not a specific event has occurred, and a data quality analysis.

By way of example, a first Control Point specification $CP_1$ may specify a fifth Parameter $P_5$, and that a crack growth analysis that is to be performed on the fifth Parameter $P_5$, i.e. $CP_1 = (P_5,$ crack growth analysis$)$.

In a further example, a second Control Point specification $CP_2$ may specify a sixth Parameter $P_6$ (which may for example be Normal Acceleration) and a check that that Parameter does not exceed a predefined limit L, i.e. $CP_2 = (P_6,$ check that P6 is less than or equal to L$)$. If a limit is exceeded, $CP_2$ may specify a "severity status message" that is to be returned to indicate the type of action which is to be performed by the operator 12.

In some embodiments, one or more of the Control Point specifications 32 include additional information. For example, a Control Point specification 32 may specify meta-data that is to be associated with a result of the data analysis specified by the Control Point specification 32, methods for encrypting or storing a result of the data analysis specified by the Control Point specification 32, etc.

In this embodiment, each of the Control Point specifications 32 included in the SHM database 16 is different to each of the other Control Point specifications 32 in the SHM database 16.

Thus a system for performing an embodiment of an SHM process is provided. Apparatus, including the SHM module 14, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

What will now be described is an embodiment of an SHM process. It should be noted that certain of the process steps depicted in the flowchart of Figure 5 and described above may be omitted or such process steps may be performed in differing order to that presented above and shown in Figure xy. Furthermore, although all the process steps have, for convenience and ease of understanding, been depicted as discrete temporally-sequential steps, nevertheless some of the process steps may in fact be performed simultaneously or at least overlapping to some extent temporally.

Figure 5 is a process flow chart showing certain steps of an embodiment of an SHM process performed by the elements described above with reference to Figures 1 to 4.

At step s2, data relating to a state or operation of the aircraft subsystems 5 are downloaded onto the time alignment module 20 of the SHM module 14.

At step s4, the time alignment module 20 time aligns the downloaded data. In other words, the time alignment module 20 registers the downloaded data, i.e. converts the downloaded data into a common coordinate system.

In some embodiments, data for Parameters 30 that are arguments of a common Parameter 30 are time-aligned, whereas data for Parameters 30 that are not arguments of a common Parameter 30 are not time aligned. For example, if Parameter $P_2$ = SQRT(ADD(POW($P_3$,2),POW($P_4$, 2)) is to be determined, Parameters $P_3$ and $P_4$ are time aligned. In other embodiments, all downloaded data is time aligned.

In some embodiments, additional data processing performed on the downloaded data. For example, downloaded data may be converted in standard units, or a noise reduction process or data validation process may be performed.

At step s6, the time alignment module 20 sends the processed (i.e. time aligned) data to the memory 22. The memory stores the time aligned data received from the time alignment module 20.

At step s8, the operator 12 requests that an SHM process is performed on the aircraft 2. In this embodiment, the operator 12 inputs an instruction to perform the SHM process into the user interface 10. The user interface 10 relays the instruction to the Fleet Management module 6.

At step s10, the Fleet Management module 6 sends the instruction to perform the SHM process to the Control Point data module 24.

In some embodiments, additional information is acquired by the Fleet Management module from the Fleet management database 8 and is also sent to the Control Point data module 28 alongside the instruction. Examples of appropriate additional information that may be sent to the Control Point data module 28 by the Fleet Management module 6 include, but are not limited to, an identifier for the aircraft 2, an aircraft type for the aircraft 2, service information for the aircraft 2, and operational information for the aircraft 2.

At step s12, the Control Point data module 28 receives the instruction to perform the SHM process and, in response, acquires each of the Control Point specifications 32 from the SHM database 16.

As described earlier above with reference to Figure 4, in this embodiment, each Control Point specification 32 specifies a Parameter 30 and an analysis for performing on that Parameter 30.

In this embodiment, the set of Control Point definitions 32 acquired by the Control Point data module 28 specifies the different analyses (and the data upon which each of those analyses are to be performed) that make up the SHM process requested by the operator 12.

At step s14, for each Control Point specification 32 acquired by the Control Point data module 28 at step s12, the Control Point data module 28 sends an identification of the Parameter 30 specified by that Control Point specification 32 to the logic processor 28.

For example, if Control Point data module 28 acquires the first Control Point specification $CP_1$ = ($P_2$, crack growth analysis), the Control Point data module 28 sends an identifier for the second Parameter $P_2$ to the logic processor 28.

At step s16, for each Parameter identifier received by the logic processor 28, the logic processor 28 acquires, from the SHM database 16, the corresponding Parameter 30.

For example, in response to receiving an identifier for the second Parameter $P_2$, the logic processor 28 acquires the specification for the second Parameter $P_2$ (i.e. the code $P_2$:=SQRT(ADD(POW($P_3$,2),POW($P_4$, 2))) from the SHM database 16.

At step s18, for each acquired Parameter 30, the logic processor 28 determines a value or values of that Parameter 30.

In this embodiment, the logic processor 28 processes the logical statements that define the Parameters 30 (that are in terms of the above mentioned predefined logical or arithmetic functions) to determine values for the Parameters 30. In this embodiment, for Parameters 30 that are defined as functions of other Parameters 30, the logic processor 28 acquires, from the SHM database 16, the specifications of those other Parameters 30 and processes them accordingly. In this embodiment, for Parameters 30 that include values of measureable factors, the logic processor 28 acquires the relevant measured values from the memory 22. In other words, for Parameters 30 that are defined to be some function of aircraft data, the logic processor acquires that downloaded, time-aligned aircraft data from the memory 22, and processes that data accordingly.

For example, in this embodiment, the logic processor 28 determines a value for $P_2$:=SQRT(ADD(POW($P_3$,2),POW($P_4$, 2)). This may require the logic processor 28 acquiring specifications for the Parameters $P_3$ and $P_4$ from the SHM database 16, and determining values for the Parameters $P_3$ and $P_4$. Also, this may require the logic processor 28 acquiring some time-aligned data from the memory 22.

In this embodiment, the memory 22 includes a cache memory configured to temporarily store determined Parameter values. For example, during the analysis of a particular dataset, when determined for the first time, determined Parameter values may be stored in the cache memory for future use in the determination of other Parameter values or Control Points during that analysis of that dataset. Once all processing for a dataset has been completed, the cache memory may be cleared of all determined Parameter values associated with that dataset. This advantageously avoids Parameter values being determined multiple times during analysis of a dataset. This advantageously tends to reduce a time taken to perform analysis of a dataset.

At step s20, the logic processor 28 sends the determined Parameter values to the Control Point data module 24.

For example, in this embodiment, the logic processor 28 sends the determined value for $P_2$ to the Control Point data module 24.

At step s22, the Control Point data module 24 sends each Control Point specification 32 and the Parameter value determined for that Control Point specification 32 to the Control Point analysis module 26.

For example, in this embodiment, the Control Point data module 24 sends the first Control Point specification $CP_1$ and the determined value for $P_2$ to the Control Point analysis module 26. In other words,

$$CP_1 = (\text{determined value for } P_2, \text{ crack growth analysis})$$

is sent from the Control Point data module 24 to the Control Point analysis module 26.

At step s24, for each received Control Point specification 32 and corresponding Parameter value, the Control Point analysis module 26 performs the data analysis process specified in that Control Point specification 32 to analyse that Parameter value.

In this embodiment, the results of each of the data analysis performed by the Control Point analysis module 26 are contained with a respective Results Object.

For example, in this embodiment, for the first Control Point $CP_1$, the Control Point analysis module 26 performs a crack growth analysis process to analyse the determined value for $P_2$. The results of the crack growth analysis on the determined value for $P_2$ are then contained with a first Results Object $RO_1$.

In some embodiments, a Result Object may also include any additional information specified by the relevant Control Point specification 32. For example, a Results Object may include meta-data associated with results of the data analysis specified by a Control Point specification 32, methods for encrypting or storing a result of the data analysis specified by the Control Point specification 32, etc.

In some embodiments, the determined Parameter value is indicative of the health of an aircraft 2 or one or more of the aircraft's subsystems 5 and no additional data analysis is performed on the determined Parameter values.

At step s26, the Control Point analysis module 26 sends the Results Objects generated at step s24 to the SHM database 16. The SHM database 16 then stores the received Results Objects. In some embodiments, the Results Objects are stored by the memory 22 instead of or in addition to being stored by the SHM database 16.

The determined Results Objects may be stored for e.g. future reporting and long term trending and monitoring of fleet usage.

At step s28, the Control Point analysis module 26 sends the Results Objects generated at step s26 to the Fleet Management module 6. In some embodiments, the Fleet management module acquires the Results Objects from a different entity, for example, from the SHM database 16 or the memory 22.

At step s30, using the received Results Objects, the Fleet Management module 6 updates some or all of the information stored by the Fleet management database 8. For example, the Fleet Management module 6 update may update service information and operational information for the aircraft 2 stored by the Fleet management database 8.

At step s32, the Fleet Management module 6 sends some or all of the Results Objects and/or some or all of the updated data stored by the Fleet Management database 8 to the operator interface 10.

At step s34, the operator interface 10 displays the results of the data analysis included in the received Results Objects to the operator 12. Thus, results of the SHM process performed on the aircraft 2 (that was requested by the operator 12 at step s8) are displayed to the operator 12.

At step s36, using the displayed results, the operator 12 performs an appropriate action. For example, if the results displayed to the operator 2 indicate that there are no faults with any of the aircraft subsystems 5, the operator 2 may clear the aircraft 2 for flight. However, if the results displayed to the operator 2 indicate that there is a fault with one or more of the aircraft subsystems 5, the operator 2 may withdraw the aircraft 2 from service and flag the aircraft 2 as requiring maintenance or repair. The operator 12 may identify the faults with aircraft 2 and the locations of the faults onboard the aircraft 2. These may be provided to a repair crew to assist with the repair or maintenance of the aircraft 2.

Thus, an SHM process is provided.

The above described SHM process uses measurements of the aircraft and its subsystems, taken over time by an array of sensors on the aircraft. Damage-sensitive features tend to be advantageously extracted from these measurements. Statistical analyses of these features are then performed to determine a current state of the structural health of the aircraft. Using the above described process, the determined health of the aircraft may be periodically updated thereby providing an assessment of the current ability of the aircraft to perform its intended function in light of the aging and degradation resulting from operational environments.

The above described system and method advantageously tend to allow for the easy updating of the SHM process.

In particular, in the above embodiments, the logic processor interprets and converts a series of associated Parameters definitions (which are stored in the SHM database) into calculations which are then applied to streaming data. Advantageously, the logic processor is provided as part of a qualified software package, whilst the Parameters stored within the SHM database are external to this qualified software. Advantageously, a user may modify or update the SHM process by modifying, updating, or deleting one or more Parameters stored within the SHM database. Updating or modifying a Parameter may include redefining a Parameter using the logical and arithmetic operations understood by the logic processor. Also, advantageously, a user may modify or update the SHM process by including, in the SHM database, new Parameters and/or new Control Point specifications. The new Parameters and control Point specifications may be defined using the logical and arithmetic operations understood by the logic processor.

The above described system advantageously tends to modular in that it tends to be possible to update, modify delete Parameters independently of other Parameters. The above described system is advantageously flexible.

Thus, the modification of the behaviour of previously qualified software advantageously tends to be facilitated. An operator advantageously tends to be provided with the ability to change easily existing algorithms or add new algorithms. Advantageously, an operator tends to be able to change complex calculations, methodologies and dependent data used in the SHM process without having to re-qualify the SHM process software. Thus, costs associated with re-qualifying SHM process software tend to be avoided.

In the above described system, by modifying existing Parameters, the algorithms implemented in the SHM process, and the coefficients used in those algorithms, may be changed. Similarly, by creating new Parameters or new control Point specifications, new algorithms for including in the SHM process may be created. This tends to be in contrast to conventional systems which use look-up tables containing a set of modifiable coefficients used by pre-defined multi-parameter algorithms. In such systems, it tends not to be possible, or difficult, to modify the algorithms without re-qualifying or re-compiling the software that specifies those algorithms.

The logic processor processes the Parameters stored in the SHM database at runtime i.e. when the SHM process is being performed. Thus, a need to modify hard coded algorithms in the SHM system code, and subsequently re-compile and re-qualify the modified algorithms tends to be eliminated.

In the above embodiments, the Structural Health Monitoring (SHM) process is performed to assess the structural health of an aircraft and its subsystems. However, in other embodiments, the SHM process is performed to assess the structural health of a different type of entity, for example a building or a vehicle other than an aircraft such as a land-based or water-based vehicle.

In the above embodiments, the SHM process is performed to assess the structural health of a single aircraft. However, in other embodiments, the SHM process is performed on multiple entities.

In the above embodiments, the SHM process is performed at the ground station. However, in other embodiments the SHM process may be performed by elements at a different location, for example onboard the aircraft. In some embodiments, the SHM process is distributed across multiple different locations.

**Claims**

1. A method for determining an assessment of the structural health of a system under test (2), the method comprising:

   providing, in a database (16), a plurality of different functions (30), the database (16) being configured to permit the addition to the database (16) of one or more further functions (30) and the deletion or modification of a stored function (30);
   acquiring, by one or more processors operatively coupled to the database (16), one or more signals, each signal being a measurement, over time, of a respective parameter of the system under test (2);
   acquiring, by the one or more processors, from the database (16), one or more of the functions (30) currently stored by the database (16); and
   calculating, by the one or more processors, using the one or more signals, values for the one or more acquired functions (30), thereby providing an assessment of the structural health of the system (2).

2. A method according to claim 1, the method further comprising:

adding, to the database (16), one or more further functions (30); and/or
deleting or modifying a function (30) stored by the database (16).

3. A method according to claim 1 or 2, wherein
each function (30) has one or more arguments; and
for each function (30), an argument of that function (30) is either a different function (30) or a parameter of the system (2).

4. A method according to any of claims 1 to 3, wherein
each function (30) is a logical statement specified using one or more pre-defined logical or arithmetic operations; and
the one or more processors comprises one or more arithmetic and logic processors (28).

5. A method according to any of claims 1 to 4, the method further comprising, using the calculated values for the one or more acquired functions (30), performing, by the one or more processors, one or more data analysis processes to provide an assessment of the structural health of the system (2).

6. A method according to any of claims 1 to 5, wherein:

the step of acquiring signals comprises acquiring multiple different signals;
the method further comprises performing, by a time alignment module (20) operative coupled to the one or more processors, a time alignment process so as to time-align the multiple different signals and produce a set of time-aligned signals; and
the step of calculating values for the one or more acquired functions (30) is performed using the time-aligned signals.

7. A method according to any of claims 1 to 6, wherein:

the method further comprises:

providing, in the database (16), a plurality of Control Point specifications (32), each Control Point specification (32) specifying a function (30); and
acquiring, by the one or more processors, from the database (16), one or more of the Control Point specifications (32) currently stored by the database (16);

the steps of acquiring one or more of the functions (30) and calculating values for those acquired functions (30) comprises acquiring those functions (30) specified by the acquired Control Point specifications (32) and calculating values for those acquired functions (30); and
the database (16) is configured to permit the addition to the database (16) of one or more further Control Point specifications (32) and the deletion or modification of a stored Control Point specification (32).

8. A method according to claim 7, wherein
each Control Point specification (32) further specifies a data analysis process; and
the method further comprises, for each acquired Control Point specification (32), performing, by the one or more processors, using the calculated values for the function (30) specified by that Control Point specification (32), the data analysis process specified by that Control Point specification (32).

9. A method according to any of claims 1 to 8, the method further comprising storing, in the database (16), the calculated values for the one or more acquired functions (30).

10. A method according to claim 9, the method further comprising storing, in the database (16), metadata associated with the calculated values for the one or more acquired functions (30).

11. A method according to any of claims 1 to 10, wherein the system under test (2) is a vehicle.

12. A method according to claim 11, wherein
the vehicle is an aircraft; and
each signal is being a measurement, over time, of parameter of an aircraft subsystem (5) selected from the group of aircraft subsystems consisting of a propulsion system, mechanical systems, a power system, a fuel system, a flight management system, an environmental control system, a hydraulics system, and a radar system.

13. Apparatus for determining an assessment of the structural health of a system under test (2), the apparatus comprising:

> a database (16); and
> one or more processor operatively coupled to the database (16); wherein
> the database (16) is configured to:
>
>> store a plurality of different functions (30); and
>> permit the addition to the database (16) of one or more further functions (30) and the deletion or modification of a stored function (30);
>
> the one or more processors are configured to:
>
>> acquire, from the database (16), one or more functions (30); and
>> calculate, using one or more signals, values for the one or more acquired functions (30), thereby providing an assessment of the structural health of the system (2); and
>
> each signal is a measurement, over time, of a respective parameter of the system under test (2).

14. A program or plurality of programs arranged such that when executed by a computer system or one or more processors it/they cause the computer system or the one or more processors to operate in accordance with the method of any of claims 1 to 12.

15. A machine readable storage medium storing a program or at least one of the plurality of programs according to claim 14.

FIG. 1

FIG. 2

FIG. 3

FIG. 4

START

DOWNLOAD DATA — s2

TIME ALIGN DATA — s4

STORE DATA — s6

REQUEST THAT SHM PROCESS BE PERFORMED — s8

SEND INSTRUCTION — s10

ACQUIRE CONTROL POINT SPECIFICATIONS — s12

SEND PARAMETER IDENTITIES — s14

ACQUIRE PARAMETERS — s16

CALCULATE PARAMETER VALUES — s18

SEND PARAMETER VALUES — s20

SEND CONTROL POINT SPECIFICATIONS AND PARAMETER VALUES — s22

PERFORM DATA ANALYSIS — s24

STORE RESULTS OBJECTS — s26

SEND RESULTS OBJECTS — s28

UPDATE INFORMATION — s30

SEND RESULTS OBJECTS — s32

DISPLAY DATA ANALYSIS RESULTS — s34

PERFORM ACTION — s36

END

FIG. 5

# EP 2 837 983 A1

**Europäisches Patentamt**
**European Patent Office**
**Office européen des brevets**

## EUROPEAN SEARCH REPORT

**Application Number**

EP 13 27 5185

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/262236 A1 (SCHACHTELY ALAN T [US] ET AL SCHACHTELY ALAN THOMAS [US] ET AL) 24 November 2005 (2005-11-24) * the whole document * | 1-15 | INV. G05B23/02 |
| A | US 2005/177761 A1 (MARTINIERE JEAN-PIERRE [FR]) 11 August 2005 (2005-08-11) * paragraph [0001] - paragraph [0020] * * paragraph [0084] * | 1-15 | |
| A | US 2009/055339 A1 (BERNARD DENYS [FR]) 26 February 2009 (2009-02-26) * paragraphs [0001], [0027] * * paragraph [0108] - paragraph [0117] * | 1-15 | |
| | | | TECHNICAL FIELDS SEARCHED (IPC) |
| | | | G05B |

The present search report has been drawn up for all claims

| Place of search | Date of completion of the search | Examiner |
|---|---|---|
| The Hague | 27 February 2014 | José Luis Meseguer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

**ANNEX TO THE EUROPEAN SEARCH REPORT
ON EUROPEAN PATENT APPLICATION NO.**                EP 13 27 5185

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2014

| Patent document cited in search report | | Publication date | Patent family member(s) | | Publication date |
|---|---|---|---|---|---|
| US 2005262236 | A1 | 24-11-2005 | AU | 2005201561 A1 | 10-11-2005 |
| | | | CN | 1690684 A | 02-11-2005 |
| | | | FR | 2869698 A1 | 04-11-2005 |
| | | | GB | 2413413 A | 26-10-2005 |
| | | | JP | 5138155 B2 | 06-02-2013 |
| | | | JP | 2005310162 A | 04-11-2005 |
| | | | US | 2005262236 A1 | 24-11-2005 |
| US 2005177761 | A1 | 11-08-2005 | AT | 357686 T | 15-04-2007 |
| | | | AU | 2003246776 A1 | 20-10-2003 |
| | | | DE | 60312667 T2 | 29-11-2007 |
| | | | EP | 1493069 A2 | 05-01-2005 |
| | | | ES | 2285159 T3 | 16-11-2007 |
| | | | FR | 2838204 A1 | 10-10-2003 |
| | | | US | 2005177761 A1 | 11-08-2005 |
| | | | WO | 03085469 A2 | 16-10-2003 |
| US 2009055339 | A1 | 26-02-2009 | FR | 2920233 A1 | 27-02-2009 |
| | | | US | 2009055339 A1 | 26-02-2009 |

EPO FORM P0459

For more details about this annex : see Official Journal of the European Patent Office, No. 12/82